# DEMANDE DE BREVET EUROPEEN

(11) **EP 2 979 960 A1**
(43) Date de publication de la demande: **03.02.2016**
(21) Numéro de dépôt: 15177821.4
(22) Date de dépôt: 22.07.2015
(51) Int. Cl.: B62J 6/00, B62J 11/00, B60Q 1/38

(54) **DISPOSITIF DE SIGNALISATION AMOVIBLE POUR VÉHICULE À DEUX ROUES**

(30) Priorité: 30.07.2014 FR 1457370
(71) Demandeur: Pourty, Maxime, 75012 Paris (FR)
(72) Inventeur: Pourty, Maxime, 75012 Paris (FR)
(74) Mandataire: Fragnaud, Aude

(57) **Abrégé**

L'invention porte sur un dispositif de signalisation pour véhicule à deux roues, destiné à se fixer de manière amovible sur ledit véhicule, de manière à ce qu'il puisse être commandé manuellement tout en maintenant les mains en contact ou à proximité du guidon (300). Le dispositif se présente sous la forme d'un tube (D) dépassant de part et d'autre du guidon (300, 400, 500) et comprenant à chacune de ses extrémités un système d'éclairage (11, 21), chaque système d'éclairage étant électriquement connecté à un système de commande (40), ledit système de commande comprenant un interrupteur (41) et une source d'alimentation en énergie (42 alimentant ledit interrupteur (41), ledit tube (D) étant formé de deux tiges creuses (10, 20) reliées entre-elles par l'intermédiaire d'une portion centrale (30) souple supportant ledit système de commande (40), de manière à former un ensemble autonome qui se fixe au véhicule au moyen d'au moins un système de fixation (100).

## Description

L'invention porte sur un dispositif de signalisation pour véhicule à deux roues. Plus particulièrement, l'invention a trait à un dispositif permettant de signaler les changements de direction.

Dans les villes, il n'est pas toujours aisé de tendre le bras aussi longtemps que nécessaire pour indiquer la direction que l'on va prendre, notamment dans les carrefours où on préfère bien souvent tenir le guidon de ses deux mains par sécurité. De plus, le bras tendu n'est pas toujours visible par les automobilistes, notamment de nuit ou par temps de pluie ou de brouillard par exemple.

Pour pallier ce problème, des dispositifs de signalisation pour bicyclettes ont déjà été réalisés afin de signaler les changements de direction.

Certains dispositifs lumineux comprennent un boitier de commande monté sur le guidon, et des feux disposés à l'avant, fixés sur le guidon et connectés au boitier de commande, et à l'arrière sur la tige de selle. Les feux avant et arrière sont alimentés en énergie par des piles. Le boitier de commande envoie les commandes d'éclairage ON/OFF aux feux (droite ou gauche) avant. Le feu avant, qui est un module maitre, est préalablement synchronisé avec le feu arrière qui est un module esclave. Une fois synchronisé, le feu avant communique au feu arrière la commande d'éclairage envoyée par le boîtier de commande selon un protocole de communication sans fil. Cependant, après chaque coupure d'alimentation d'un des feux avant ou arrière, les feux doivent être resynchronisés. Or, les vibrations de la bicyclette sur les routes font vibrer légèrement les piles à l'intérieur des boitiers et entrainent régulièrement des microcoupures qui désynchronisent alors les feux. Le feu arrière ne peut alors plus fonctionner correctement mettant en danger la sécurité du cycliste. Un autre inconvénient réside dans le fait que si le cycliste veut porter une charge sur son porte-bagages ou tirer une remorque par exemple, ses feux arrière ne seront pas visibles. De même, s'il installe un panier devant son guidon, ses feux avant ne seront pas visibles non plus.

Un autre moyen de réaliser un dispositif de signalisation de changement de direction est décrit dans la demande de brevet US2009/0102627. Ce dispositif comprend un interrupteur à proximité de chaque poignée du guidon. Chaque interrupteur (droite et gauche) est relié par un circuit filaire aux feux, respectivement droite et gauche, disposés sur chaque extrémité d'une tige fixée sur la tige de selle, de sorte que les feux sont déportés de part et d'autre de la bicyclette et bien visibles. Un boitier disposé sur le circuit filaire entre les interrupteurs et les feux de signalisation, comprend un contrôleur et un moyen d'alimentation en énergie de type batterie, dynamo, ou générateur à pédale. Lorsque le contrôleur reçoit une information de l'un des interrupteurs, il envoie un signal de commande d'éclairage du feu associé à l'interrupteur. Les feux sont amovibles. Cependant il reste les interrupteurs, le boitier et les fils de transmission du signal électrique qui ne peuvent pas être enlevés et remontés de manière simple et rapide. Par conséquent, on ne peut pas utiliser les feux de signalisation sur n'importe quel véhicule à deux roues puisqu'il faut dans ce cas, que le véhicule à deux roues soit déjà équipé des interrupteurs, du boitier de commande et du système de transmission filaire.

Le document EP-A-0505182 décrit un dispositif de signalisation pour bicyclette comprenant un boitier central rigide, lequel renferme une unité de commande, un logement pour batterie et un interrupteur et est raccordé à deux bras flexibles à l'extrémité desquels sont intégrés des systèmes d'éclairage. Ce dispositif comprend deux bras flexibles pour permettre une orientation des systèmes d'éclairage dans toutes les directions. Cependant, l'inconvénient de ce dispositif réside dans le fait que les bras doivent être constamment réglés pour être visibles, d'autant plus que leur position peut bouger sous l'effet des vibrations dues aux aspérités de la route lors de l'utilisation de la bicyclette.

Les solutions existantes n'apportent donc pas entière satisfaction. Certains dispositifs présentent des problèmes de dysfonctionnement qui peuvent être pénalisant pour la sécurité de l'utilisateur. Ils ne sont en outre pas toujours visibles notamment lorsque le véhicule à deux roues porte des charges ou tracte une remorque. Certains dispositifs ne sont pas toujours facilement et/ou intégralement démontables.

L'invention a donc pour but de remédier à au moins un des inconvénients de l'art antérieur. En particulier, l'invention vise à proposer un dispositif de signalisation pour véhicule à deux roues, destiné à se fixer de manière amovible sur ou à proximité d'un guidon, qui puisse être vu de n'importe quel angle, même lorsque le véhicule porte une charge ou tracte une remorque, qui puisse être commandé par une action brève et qui puisse être entièrement démonté du véhicule de manière très simple et rapide.

A cet effet, l'invention a pour objet un dispositif de signalisation pour véhicule à deux roues, destiné à se fixer de manière amovible sur ledit véhicule, de manière à ce qu'il puisse être commandé manuellement, caractérisé en ce qu'il se présente sous la forme d'un tube dépassant de part et d'autre du guidon et comprenant à chacune de ses extrémités un système d'éclairage, chaque système d'éclairage étant électriquement connecté à un système de commande, le système de commande comprenant un interrupteur, et une source d'alimentation en énergie alimentant ledit interrupteur, ledit tube étant formé de deux tiges creuses reliées entre-elles par l'intermédiaire d'une portion centrale souple supportant ledit système de commande, de manière à former un ensemble autonome qui se fixe au véhicule au moyen d'au moins un système de fixation.

Ainsi, le dispositif de signalisation est compact et intègre tous les éléments nécessaires à la signalisation dans un seul et même appareil autonome qui peut être facilement et rapidement démonté et adapté sur n'importe quel véhicule à deux roues. Le système d'éclairage étant disposé à chaque extrémité du tube qui dépasse de part et d'autre du guidon, il est visible même lorsque le véhicule porte une charge ou tracte une remorque.

Selon d'autres caractéristiques optionnelles du dispositif de signalisation :
- le système de commande comprend en outre une centrale clignotante reliée à l'interrupteur,
- chaque tige creuse est télescopique et présente plusieurs longueurs réglables et blocables au moyen d'un système d'arrêt,
- les tiges creuses et la portion centrale souple comprennent une liaison filaire électrique permettant de connecter électriquement chaque système d'éclairage au système de commande,
- le système d'éclairage comprend une ou plusieurs diodes électroluminescentes réparties à l'intérieur d'un embout arrondi,
- le dispositif comprend deux sources d'alimentation en énergie alimentant l'interrupteur et réparties à l'intérieur de chaque tige creuse,
- le système de fixation se présente sous la forme d'une bague de serrage apte à être serrée sur une tige dans une position de fixation et à être desserré pour être laissée libre en translation le long de ladite tige dans une position de réglage, ladite bague supportant un crochet apte à agripper un élément du véhicule à deux roues,
- le système de fixation se présente sous la forme d'une pince comprenant un axe d'articulation et, de part et d'autre dudit axe d'articulation, un manche de préhension et une mâchoire destinée à enserrer un élément du véhicule à deux roues, ladite pince s'articulant entre une première position de réglage selon laquelle les bras du manche de préhension sont rapprochés pour ouvrir la mâchoire, et une seconde positon de fixation selon laquelle les bras du manche de préhension sont relâchés et écartés pour refermer la mâchoire, et un orifice est ménagé dans l'axe d'articulation pour former un passage pour une tige,
- la pince comprend deux parties, chaque partie comprenant deux parois latérales sur chacune desquelles est ménagée une section annulaire dont un orifice circulaire forme ledit passage pour ladite tige, lesdites sections annulaires d'une partie présentant un écartement supérieur à l'écartement entre lesdites sections annulaires de l'autre partie, de sorte que les sections annulaires de chaque partie se chevauchent lorsque les deux parties sont assemblées, et en position de réglage les orifices des sections annulaires de chaque partie sont concentriques et offrent à la pince une liberté de mouvement le long de ladite tige creuse alors qu'en position de fixation, un ressort de torsion exerce une force tendant à écarter les bras du manche de préhension et à décaler les sections annulaires de chaque partie l'une par rapport à l'autre entrainant une diminution du diamètre de l'orifice de l'axe d'articulation de sorte qu'il enserre ladite tige creuse empêchant tout mouvement de ladite pince le long de ladite tige creuse,
- le système de fixation comprend en outre une seconde mâchoire dont la taille est inférieure à la première mâchoire, ladite seconde mâchoire étant apte à enserrer un câble,
- le système de fixation se fixe sur le guidon du véhicule à deux roues au moyen de sa première mâchoire, ou sur un câble au moyen de sa seconde mâchoire.

D'autres particularités et avantages de l'invention apparaitront à la lecture de la description suivante faite à titre d'exemple illustratif et non limitatif, en référence aux Figures annexées qui représentent :
- Les Figures 1A à 1C, des schémas du dispositif selon l'invention fixé sur différentes configurations de guidons,
- La Figure 2, un schéma du dispositif selon l'invention lorsqu'il est démonté et plié pour être rangé,
- La Figure 3, un schéma en coupe de la portion centrale souple du dispositif équipée du système de commande,
- Les Figures 4A à 4C, des schémas d'un système de fixation en position de fixation, vus respectivement en perspective latérale, en coupe latérale semi-éclatée, et en coupe selon l'axe d'articulation du système de fixation,
- Les Figures 5A à 5C, des schémas d'un système de fixation en position de réglage, vus respectivement en perspective latérale, en coupe latérale semi-éclatée, et en coupe selon l'axe d'articulation du système de fixation.

Sur toutes les Figures, les mêmes signes de référence sont utilisés pour désigner les mêmes éléments.

Dans la suite de la description, on entend par « véhicule à deux roues » tout type de véhicule à deux roues, électriquement assisté ou non.

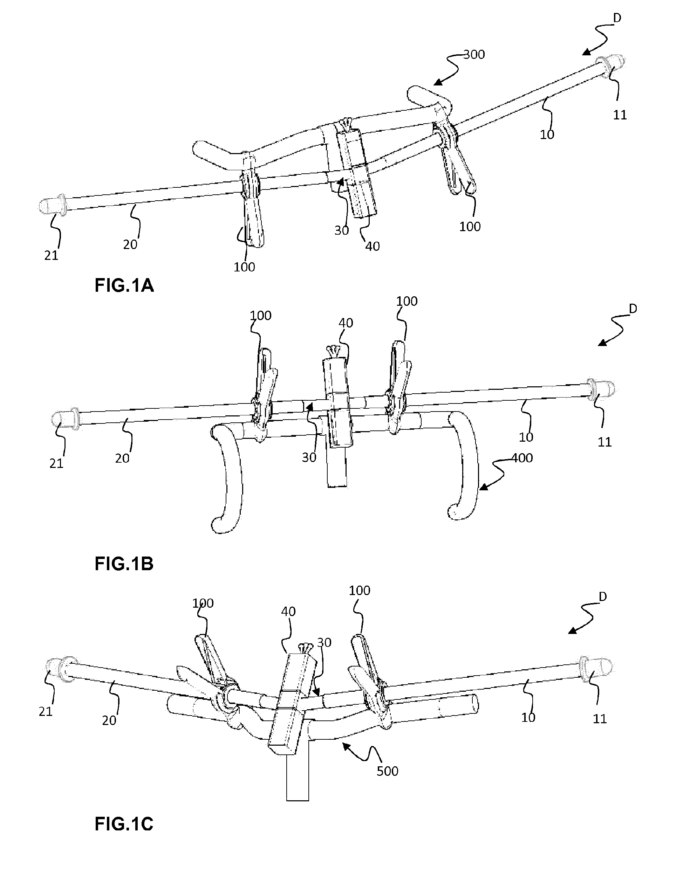

Les Figures 1A à 1C représentent le dispositif de signalisation D selon l'invention fixé sur des guidons 300, 400, 500 présentant des configurations différentes.

Grâce à son système de fixation, se présentant sous forme de pince 100 et dont la position est réglable le long du dispositif, le dispositif de signalisation peut s'adapter sur n'importe quel guidon et en divers endroits du guidon, choisis en fonction de l'emplacement des lampes et/ou sonnettes placés par son utilisateur.

Dans certains cas particuliers décrits dans la suite de la description, le dispositif ne peut pas être fixé sur le guidon. Il sera alors fixé ailleurs sur le véhicule à deux roues, à proximité du guidon, de sorte qu'il puisse être commandé manuellement tout en maintenant les mains en contact ou à proximité du guidon. Ainsi, s'il faut lâcher une main du guidon pour actionner la commande, cela reste un geste simple et rapide qui n'engage pas la sécurité du cycliste.

Le dispositif se présente sous la forme d'un tube D qui dépasse de part et d'autre du guidon 300, 400, 500, de manière à être visible même lorsque le véhicule porte une charge ou tracte une remorque. Le tube comprend, à chacune de ses extrémités, un système d'éclairage 11, 21.

De préférence, le système d'éclairage 11, 21 comprend une ou plusieurs diodes électroluminescentes, notées LED par la suite, qui sont réparties à l'intérieur d'un embout arrondi, de sorte que lorsque le système d'éclairage est allumé, il est visible à 360° dans le plan axial de la LED et à 180° dans le plan de la route, c'est-à-dire aussi bien de l'avant que de l'arrière du véhicule.

De manière avantageuse, le tube est formé de deux tiges creuses 10, 20 reliées entre-elles par l'intermédiaire d'une portion centrale 30 souple. Cette portion centrale souple permet ainsi de courber le dispositif pour l'adapter sur n'importe quelle forme de guidon.

La portion centrale souple 30 présente en outre l'avantage d'amortir les chocs éventuels pouvant se produire lorsqu'une voiture passe trop près et percute les tiges du dispositif. Elle permet alors d'éviter un déséquilibre de l'utilisateur du véhicule à deux roues.

Cette portion centrale souple 30 peut par exemple être réalisée au moyen d'un manchon en plastique souple, de type caoutchouc par exemple, ou tout autre moyen équivalent.

Les tiges 10, 20 présentent une longueur telle qu'elles dépassent de part et d'autre du guidon et du cycliste, de manière à ce que le système d'éclairage 11, 21, disposé à leur extrémité, soit bien visible de l'avant comme de l'arrière du véhicule.

Selon une variante de réalisation, les tiges 10, 20 peuvent être amovibles. Ainsi, on peut par exemple prévoir des tiges de différentes longueurs, de sorte que la tige 10, 20 est plus longue lorsque le véhicule tracte une remorque par exemple que lorsque le véhicule ne tracte rien. Dans ce cas, la liaison démontable comprendra par exemple un pas de vis qui garantira la continuité électrique entre les liaisons filaires provenant des systèmes d'éclairage 11, 21 et du système de commande 40 décrit ci-dessous.

Selon une autre variante de réalisation, on peut aussi prévoir que les tiges 10, 20 soient télescopiques. Dans ce cas, chaque tige 10, 20 est alors formée d'au moins deux cylindres de section différente de sorte qu'un cylindre coulisse dans l'autre. Des systèmes d'arrêt peuvent être prévus le long des cylindres de manière à verrouiller la longueur de la tige. Ces systèmes d'arrêt peuvent par exemple prendre la forme d'un ergot rétractable sur le cylindre intérieur, et d'une pluralité d'orifices sur le cylindre extérieur, les orifices délimitant chacun une longueur de tige, de sorte que lorsque l'on souhaite régler la tige pour qu'elle présente une longueur déterminée, on fait coulisser les cylindres l'un dans l'autre jusqu'à ce que l'ergot du cylindre intérieur s'engage dans l'orifice du cylindre extérieur correspondant à la longueur choisie.

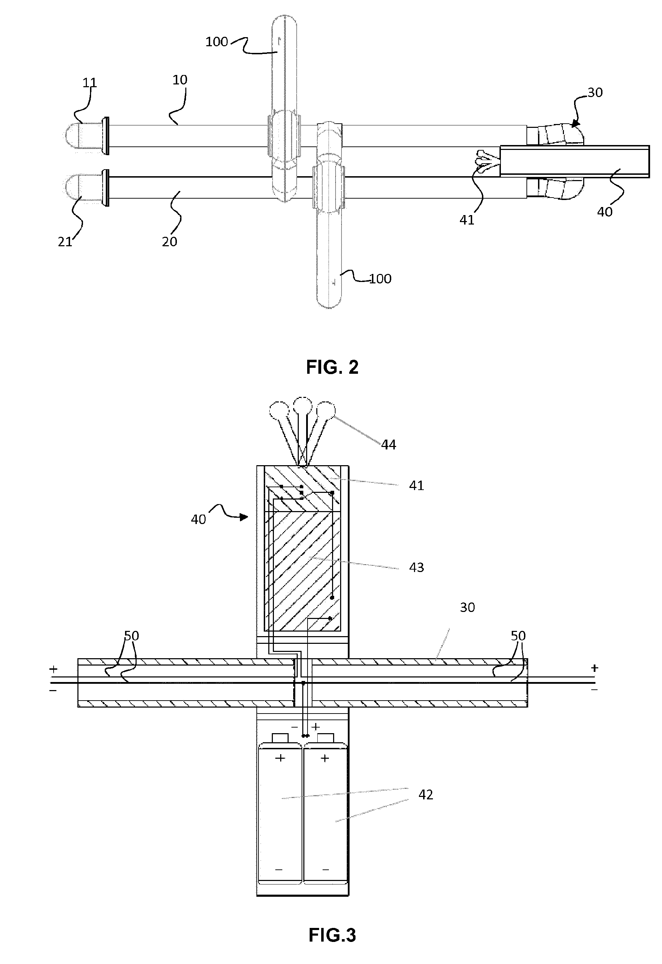

Le dispositif D comprend en outre un système de commande 40 des systèmes d'éclairage 11, 21, pour commander leur allumage ou leur extinction. Le système de commande 40, disposé sur la pièce centrale 30 souple, comprend un interrupteur 41. L'interrupteur 41 est relié par une liaison filaire électrique passant à l'intérieur de chaque tige creuse 10, 20 et de la portion centrale souple 30, aux systèmes d'éclairages 11, 21 qu'il commande. Le système de commande comprend en outre une source d'alimentation en énergie référencée 42 sur la Figure 3. La source d'alimentation en énergie peut être constituée d'une ou plusieurs piles montées en série ou d'une batterie rechargeable par exemple, ou tout autre moyen équivalent.

Le dispositif D de signalisation renferme donc tous les éléments nécessaires à la signalisation et constitue un ensemble solidaire et autonome qui peut être facilement démonté d'un véhicule à deux roues et être fixé sur n'importe quel autre véhicule à deux roues, grâce à son système de fixation se présentant sous la forme d'une pince 100, et dont la position le long des tiges 10, 20 est réglable.

La Figure 2 représente le dispositif lorsqu'il est détaché du véhicule et replié pour être rangé. La portion centrale souple 30 permet ainsi de replier le dispositif en deux. Les pinces de fixation 100 de chaque tige 10, 20 enserrent l'autre tige respectivement 20, 10, afin de verrouiller le dispositif en position repliée. Ainsi, le dispositif de signalisation peut être facilement et rapidement rangé dans une housse ou un sac de transport par exemple.

La Figure 3 représente un schéma en coupe de la portion centrale souple 30 du dispositif, équipée du système de commande 40 d'éclairage.

La portion centrale souple 30 coopère avec une extrémité de chaque tige creuse 10, 20 dans laquelle elle s'enfiche, pour permettre la fixation mécanique de cette-dernière. La portion centrale souple présente une longueur suffisante pour éviter tout démontage intempestif lors d'un choc ou lorsque le dispositif est replié pour être rangé. Le système de commande 40 comprend un interrupteur 41, à 3 positions ou plus, actionnable par un bouton 44. L'interrupteur est électriquement connecté à une centrale clignotante 43 et à une source d'alimentation en énergie 42 intégrées au système de commande 40. La source d'alimentation en énergie peut se matérialiser par une ou plusieurs piles ou une batterie rechargeable par exemple ou tout autre moyen équivalent. L'interrupteur 41 et la source d'alimentation en énergie 42 sont d'autre part raccordés aux systèmes d'éclairage 11, 21 de chaque tige creuse 10, 20 par l'intermédiaire de fils électriques 50 passant à l'intérieur des tiges creuses 10, 20 et de la portion centrale souple 30. La centrale clignotante 43 sera un dispositif du commerce tel que par exemple la centrale clignotante 6 volts vendue sous la référence 01 30605 par la société Guilera. De même, l'interrupteur 41 sera également choisi parmi des interrupteurs disponibles dans le commerce.

Dans une variante de réalisation, le dispositif peut comprendre deux sources d'alimentation en énergie 42 réparties à l'intérieur de chaque tige creuse 10, 20. Cette variante permet non seulement de répartir le poids du dispositif, mais également de diminuer l'encombrement et le poids du boîtier du système de commande 40.

De préférence, les tiges creuses 10, 20, la portion centrale souple 30 et le boitier du système de commande 40 sont réalisés dans un matériau électriquement isolant afin d'éviter tout risque de court-circuit.

L'interrupteur 41 comprend un bouton 44 de sélection qui peut par exemple prendre trois positions : une position OFF pour éteindre le système d'éclairage en coupant la tension d'alimentation, une première position ON1 pour allumer le système d'éclairage d'une des tiges en feu clignotant, et une deuxième position ON2 pour allumer le système d'éclairage de l'autre tige en feu clignotant.

Dans une variante de réalisation, on peut prévoir de commander l'éclairage des systèmes d'éclairage 11, 21 de chaque tige creuse 10, 20 en feu fixe. Dans ce cas, le système de commande ne comprend pas de centrale clignotante. Dans une autre variante, on peut prévoir le choix de commander l'éclairage des systèmes d'éclairage 11, 21 de chaque tige creuse 10, 20 en feu fixe, ou feu clignotant. Pour cela, on pourrait par exemple juxtaposer un deuxième interrupteur.

Dans encore une autre variante de réalisation, on peut prévoir deux systèmes de commande 40 d'éclairage, chaque système de commande 40 étant dédié à un système d'éclairage 11, 21 d'une des tiges 10, 20, et permettant de commander l'éclairage en feu fixe et/ou clignotant et l'extinction grâce à son interrupteur à 3 positions.

Le dispositif selon l'invention est fixé au véhicule à deux roues par au moins un système de fixation. De préférence, il est fixé à l'aide de deux systèmes de fixation, un par tige creuse 10, 20.

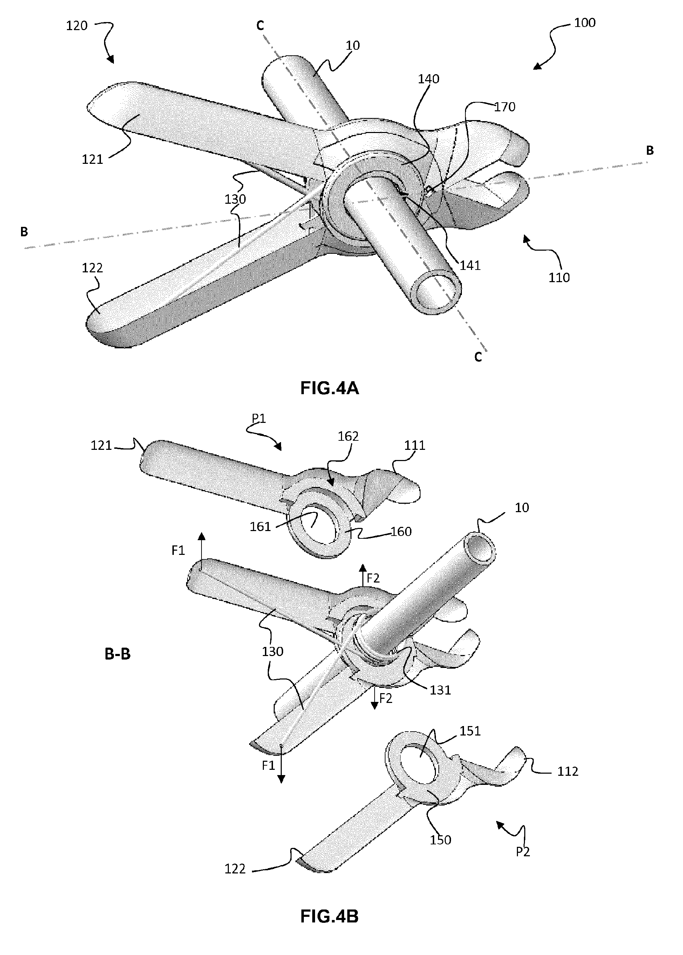

Les Figures 4A à 4C représentent des schémas d'un tel système de fixation en position de fixation, vus respectivement en perspective latérale, en coupe latérale B-B semi-éclatée, et en coupe C-C selon l'axe d'articulation du système de fixation. Ce système de fixation prend la forme d'une pince 100 comprenant un manche 120 de préhension à deux bras 121, 122 et une mâchoire 110 située à l'opposé du manche de préhension par rapport à l'axe d'articulation 140 de la pince 100.

L'axe d'articulation 140 comprend un orifice 141 formant un passage pour une tige 10, 20 du dispositif. Un ressort de torsion 130 permet de maintenir les bras 121, 122 du manche 120 de préhension écartés en position de repos.

La Figure 4B illustre plus en détails la pince et son fonctionnement. Elle représente une vue semi éclatée en coupe latérale selon l'axe B-B de la pince 100 de la Figure 4A.

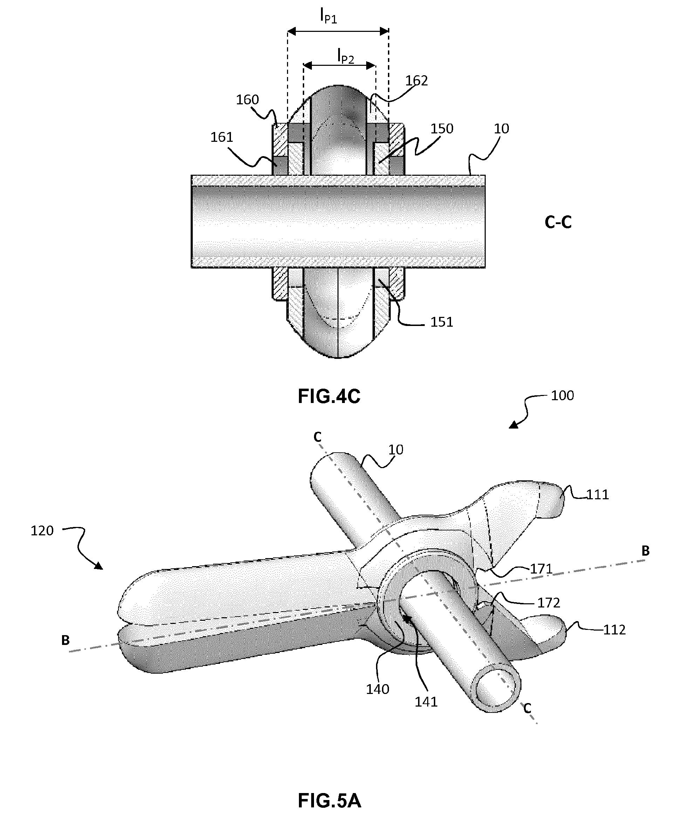

Cette pince comprend deux parties P1, P2, respectivement supérieure et inférieure qui s'imbriquent l'une dans l'autre au niveau de l'axe d'articulation 140. Chaque partie P1, P2 comprend respectivement un bras 121, 122 du manche de préhension 120 et une branche 111, 112 de la mâchoire 110. Chaque partie P1, P2 comprend en outre, entre le bras 121, 122 du manche 120 et la branche 111, 112 de la mâchoire 110, sur ses deux parois latérales (dont une seule est visible sur la vue en coupe de la Figure 4B) une section annulaire 160, 150 destinée à former l'axe d'articulation de la pince. Chaque section annulaire 160, 150 de chaque partie P1, P2 comprend un orifice circulaire 161, 151 formant le passage pour la tige creuse 20. Comme on peut le voir sur la vue en coupe C-C selon l'axe d'articulation de la Figure 4C, les sections annulaires 160 d'une première partie P1 présentent un écartement I_{P1} supérieur à l'écartement I_{P2} des sections annulaires 150 de l'autre partie P2. Ainsi, lorsque les parties P1 et P2 sont assemblées, les sections annulaires 150 de la partie P2, présentant l'écartement I_{P2} le plus faible, s'encastrent entre les sections annulaires 160 de la partie P1, dont l'écartement I_{P1} est supérieur. Les sections annulaires 160, 150 des deux parties P1, P2 se chevauchent alors.

Le ressort de torsion 130 comprend une ou plusieurs spires 131 disposées dans l'axe de l'axe d'articulation 140 de la pince, c'est-à-dire entre les deux sections annulaires 150 de la partie P2 dont l'écartement I_{P2} est le plus petit. Les extrémités du ressort 130, quant-à-elles, appuient sur les extrémités des bras 121, 122 du manche de préhension 120. Le ressort de torsion 130 exerce alors une force F1 tendant à écarter les bras 121, 122 du manche 120 de préhension en position de repos. Dans cette position, le diamètre interne de l'orifice 141 de l'axe d'articulation 140 est diminué et n'est pas circulaire. En effet, dans ce cas, la force F2 exercée par le ressort 130 tend à écarter les deux parties P1, P2 de la pince de sorte que leurs sections annulaires 150, 160 ne se chevauchent plus complètement et sont légèrement décalées les unes par rapport aux autres. Leurs orifices respectifs 161, 151 ne sont donc pas concentriques.

Par conséquent, dans cette position, les sections annulaires 160, 150 des deux parties P1, P2 étant décalées les unes par rapport aux autres, les deux parties P1, P2 sont toutes les deux en appui sur la tige creuse 10, tel qu'illustré sur la Figure 4C qui représente la pince de la Figure 4A vue en coupe selon l'axe d'articulation C-C. L'orifice 141 de l'axe d'articulation 140 n'est alors pas circulaire, et son diamètre est inférieur au diamètre de chacun des orifices 151, 161 de chacune des sections annulaires latérales 150, 160. L'orifice 141 enserre donc la tige 10. La pince 100 ne peut alors pas bouger le long de la tige 10. Cette position de repos est également appelée position de fixation.

Les Figures 5A à 5C représentent des schémas de la même pince 100 de fixation que celle des Figures 4A à 4C, mais en position de réglage. Sur ces Figures, les schémas représentent la pince 100 vue respectivement en perspective latérale, en coupe latérale B-B semi-éclatée, et en coupe C-C selon son axe d'articulation.

En position de réglage, un utilisateur resserre les deux bras 121, 122 du manche 120 de préhension. Le fait de resserrer les bras du manche permet non seulement d'ouvrir la mâchoire 110 afin de pouvoir la placer sur un élément du véhicule, pour l'enserrer lorsque l'utilisateur relâche le manche de préhension, mais aussi d'élargir l'orifice 141 de l'axe d'articulation 140 de la pince, de sorte que l'orifice 141 et la tige 10 deviennent complètement concentriques si bien que la pince est libre de bouger le long de la tige 10.

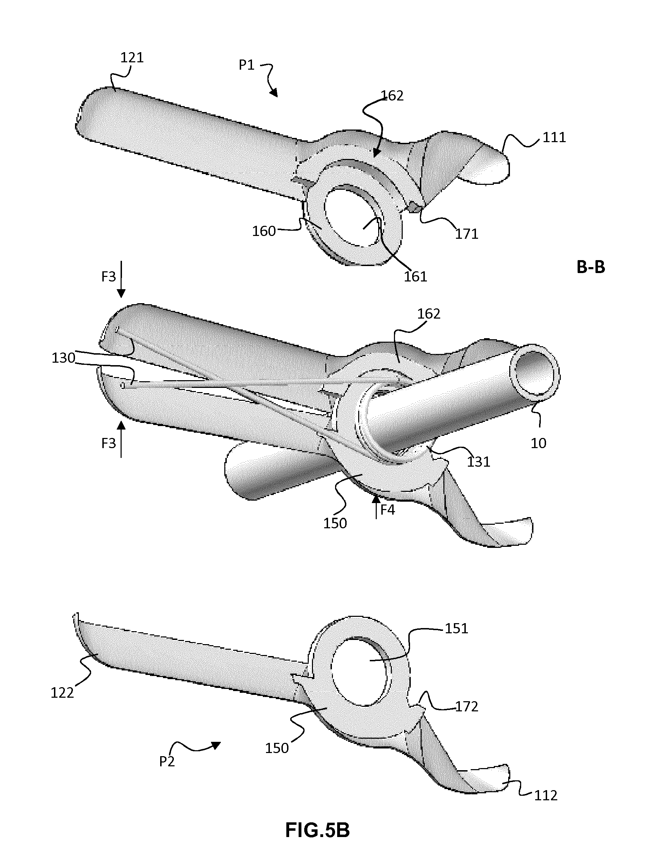

La Figure 5B illustre plus en détails la pince dans sa position de réglage. Elle représente une vue semi éclatée en coupe latérale selon l'axe B-B de la pince 100 de la Figure 5A.

En resserrant les bras 121, 122 du manche 120 de préhension, l'utilisateur exerce une force F3 supérieure à la force F1 exercée par le ressort de torsion 130, de sorte que les parties P1 et P2 ont tendance à se rapprocher l'une de l'autre (selon la flèche F4 sur la Figure 5B). Les sections annulaires 150 de la partie P2, dont l'écartement I_{P2} est le plus petit, viennent alors se loger en appui sur une butée 162 semi-circulaire située le long du diamètre extérieur des sections annulaires 160 de la partie P1. Dans ce cas, les deux sections annulaires 160, 150 de chaque partie P1, P2 se chevauchent parfaitement et leurs orifices respectifs 161, 151 sont parfaitement alignés. Par conséquent, le diamètre de l'orifice 141 de l'axe d'articulation 140 de la pince 100 s'élargit et devient parfaitement circulaire et concentrique avec l'axe de la tige 10. L'orifice 141 n'enserre alors plus la tige, et la pince est libre en mouvement le long de la tige 10. Dans cette position de réglage, la pince 100 présente une liberté de mouvement le long de la tige 10 et l'utilisateur peut la positionner à un endroit de la tige le plus adapté pour fixer sa mâchoire 110 sur un élément du véhicule à deux roues.

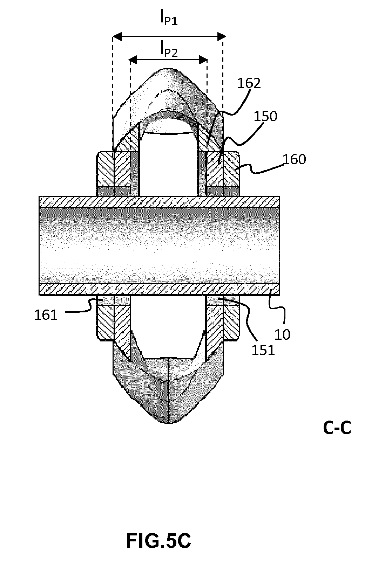

La Figure 5C, qui représente la pince de la Figure 5A vue en coupe C-C, selon l'axe d'articulation, représente bien cette position selon laquelle tous les orifices 151, 161 sont alignés et concentriques avec l'axe de la tige 10.

Sur les Figure 4A à 5C, on remarque en outre que la pince 100 comprend, entre l'axe d'articulation 140 et la mâchoire 110, une seconde mâchoire 170 dont la taille est inférieure à celle de la première mâchoire 110. Cette deuxième mâchoire 170, qui comprend une branche 171, 172 respectivement sur chaque partie P1, P2 de la pince, permet d'enserrer un câble. Plus particulièrement, une branche 171 de cette seconde mâchoire 170 est réalisée à une extrémité de chaque butée 162 semi-circulaire de la partie P1 la plus large I_{P1}, tandis que l'autre branche 172 de cette seconde mâchoire est réalisée dans le prolongement des sections annulaires 150 de l'autre partie P2.

Cette deuxième mâchoire 170 s'avère être très utile lorsqu'il n'est pas possible de fixer la pince sur le guidon par exemple. Cette situation peut se produire notamment avec des bicyclettes de location par exemple. En effet, dans ce cas, les guidons sont souvent protégés par un cache en plastique qui permet de masquer tous les câbles et éviter le vandalisme. Dans ce cas, le cache est alors trop gros pour que la mâchoire 110 de la pince puisse l'enserrer. On peut alors fixer la pince, grâce à la seconde mâchoire 170, sur un câble d'un panier situé à l'avant du véhicule et à proximité du guidon. Ainsi, le dispositif de signalisation reste à proximité du guidon, afin de pouvoir le commander tout en maintenant les mains en contact ou à proximité du guidon.

Selon un autre mode de réalisation, le système de fixation peut se présenter sous la forme d'une bague de serrage. Dans ce cas, chaque tige creuse 10, 20 est équipée d'une telle bague. La bague est desserrée de manière à ce qu'elle soit libre en translation sur sa tige au moment du réglage de sa position puis, lorsqu'elle est en position, elle est serrée afin d'être maintenue fixement en position sur la tige. La bague supporte un crochet apte à agripper des zones ou éléments du guidon ou d'un panier par exemple. Lorsque le dispositif de signalisation doit être fixé sur un guidon par exemple, la position des bagues est réglée, par translation sur chaque tige 10, 20, jusqu'à un emplacement choisi pour que leur crochet puisse agripper un élément ou une zone du guidon. Les bagues sont alors maintenues en position sur les tiges par serrage, au moyen d'une vis papillon par exemple, qui bride alors la bague sur sa tige afin de la fixer solidement en place. Au moment de la fixation du dispositif de signalisation, les tiges 10, 20 étant reliées par la portion centrale souple 30, on peut utiliser leur effort à la traction pour créer un rapprochement élastique entre les deux crochets, ce qui permet une meilleure fixation.

Enfin, ce système de fixation permet lui aussi de maintenir le dispositif de signalisation en position repliée, les crochets de chaque bague étant aptes à agripper la tige 10, 20 en regard et à la maintenir ainsi dans sa position repliée.

## Revendications

1. Dispositif de signalisation pour véhicule à deux roues, destiné à se fixer de manière amovible sur ledit véhicule, de manière à ce qu'il puisse être commandé manuellement, **caractérisé en ce qu'**il se présente sous la forme d'un tube (D) dépassant de part et d'autre du guidon (300, 400, 500) et comprenant à chacune de ses extrémités un système d'éclairage (11, 21), chaque système d'éclairage étant électriquement connecté à un système de commande (40), ledit système de commande comprenant un interrupteur (41), et une source d'alimentation en énergie (42) alimentant ledit interrupteur (41), ledit tube (D) étant formé de deux tiges creuses (10, 20) reliées entre-elles par l'intermédiaire d'une portion centrale (30) souple supportant ledit système de commande (40), de manière à former un ensemble autonome qui se fixe au véhicule au moyen d'au moins un système de fixation (100).

2. Dispositif de signalisation selon la revendication 1, **caractérisé en ce que** chaque tige creuse (10, 20) est télescopique et présente plusieurs longueurs réglables et blocables au moyen d'un système d'arrêt.

3. Dispositif de signalisation selon l'une des revendications 1 à 2, **caractérisé en ce que** le système de commande (40) comprend en outre une centrale clignotante (43).

4. Dispositif de signalisation selon l'une des revendications 1 à 3, **caractérisé en ce que** les tiges creuses (10, 20) et la portion centrale souple (30) comprennent une liaison filaire électrique (50) permettant de connecter électriquement chaque système d'éclairage (11, 21) au système de commande (40).

5. Dispositif de signalisation selon l'une des revendications 1 à 4, **caractérisé en ce que** le système d'éclairage (11, 21) comprend une ou plusieurs diodes électroluminescentes réparties à l'intérieur d'un embout arrondi.

6. Dispositif de signalisation selon l'une des revendications 1 à 5, **caractérisé en ce qu'**il comprend deux sources d'alimentation en énergie (42) alimentant l'interrupteur (41) et réparties à l'intérieur de chaque tige creuse (10, 20).

7. Dispositif de signalisation selon l'une des revendications 1 à 6, **caractérisé en ce que** le système de fixation se présente sous la forme d'une bague de serrage apte à être serrée sur une tige (10, 20) dans une position de fixation et à être desserré pour être laissée libre en translation le long de ladite tige dans une position de réglage, ladite bague supportant un crochet apte à agripper un élément du véhicule à deux roues.

8. Dispositif de signalisation selon l'une des revendications 1 à 6, **caractérisé en ce que** le système de fixation (100) se présente sous la forme d'une pince comprenant un axe d'articulation (140) et, de part et d'autre dudit axe d'articulation, un manche de préhension (120) et une mâchoire (110) destinée à enserrer un élément du véhicule à deux roues, ladite pince s'articulant entre une première position de réglage selon laquelle les bras (121, 122) du manche de préhension (120) sont rapprochés pour ouvrir la mâchoire (110), et une seconde positon de fixation selon laquelle les bras (121, 122) du manche de préhension (120) sont relâchés et écartés pour refermer la mâchoire (110), et **en ce qu'**un orifice (141) est ménagé dans l'axe d'articulation (140) pour former un passage pour une tige (10, 20).

9. Dispositif de signalisation selon la revendication 8, **caractérisé en ce que** la pince comprend deux parties (P1, P2), chaque partie comprenant deux parois latérales sur chacune desquelles est ménagée une section annulaire (160, 150) dont un orifice circulaire (161, 151) forme ledit passage pour ladite tige (10, 20), lesdites sections annulaires (160) d'une partie (P1) présentant un écartement (I_{P1}) supérieur à l'écartement (I_{P2}) entre lesdites sections annulaires (150) de l'autre partie (P2), de sorte que les sections annulaires (160, 150) de chaque partie (P1, P2) se chevauchent lorsque les deux parties (P1, P2) sont assemblées, et **en ce qu'**en position de réglage les orifices (151, 161) des sections annulaires de chaque partie (P1,P2) sont concentriques et offrent à la pince une liberté de mouvement le long de ladite tige creuse (10, 20) alors qu'en position de fixation, un ressort de torsion (130) exerce une force tendant à décaler les sections annulaires (160, 150) de chaque partie (P1,P2) l'une par rapport à l'autre entrainant une diminution du diamètre de l'orifice (141) de l'axe d'articulation (140) de sorte qu'il enserre ladite tige creuse (10, 20) empêchant tout mouvement de ladite pince le long de ladite tige creuse.

10. Dispositif de signalisation selon l'une des revendications 8 à 9, **caractérisé en ce que** le système de fixation (100) comprend en outre une seconde mâchoire (170) dont la taille est inférieure à la première mâchoire (110), ladite seconde mâchoire (170) étant apte à enserrer un câble.

11. Dispositif de signalisation selon l'une des revendications à 10, **caractérisé en ce que** le système de fixation (100) se fixe sur le guidon (300, 400, 500) du véhicule à deux roues au moyen de sa première mâchoire (110), ou sur un câble au moyen de sa seconde mâchoire (170).
